# FASCICULE DE BREVET EUROPEEN

(11) **EP 2 398 944 B1**
(45) Date de publication et mention de la délivrance du brevet: **19.11.2014**
(21) Numéro de dépôt: 10708346.1
(22) Date de dépôt: 15.02.2010
(51) Int. Cl.: D01F 9/00, D01F 2/24, D01D 5/06

(54) **PROCEDE D'OBTENTION D'UN ELEMENT LONGIFORME DE POLYSACCHARIDE, NOTAMMENT UN FIL DE CHITOSANE, ET FIL DE POLYSACCHARIDE OBTENU**
VERFAHREN ZUR HERSTELLUNG EINES VERLÄNGERTEN POLYSACCHARIDELEMENTS, INSBESONDERE EINES CHITOSANFADENS, UND IN DIESEM VERFAHREN GEWONNENER POLYSACCHARIDFADEN
METHOD FOR PRODUCING AN ELONGATE POLYSACCHARIDE ELEMENT, IN PARTICULAR A CHITOSAN THREAD, AND POLYSACCHARIDE THREAD OBTAINED

(30) Priorité: 17.02.2009 FR 0951028
(43) Date de publication de la demande: 28.12.2011
(73) Titulaire: Laboratoire Tetra Medical, 07100 Annonay (FR); Université Claude Bernard Lyon I, 69622 Villeurbanne Cedex (FR); Centre National de la Recherche Scientifique, 75794 Paris Cedex 16 (FR)
(72) Inventeur: DOMARD, Alain, F-69006 Lyon (FR); DAVID, Laurent, F-69004 Lyon (FR); MONTEMBAULT, Alexandra, F-42000 Saint Etienne (FR); DESORME, Mylène, F-42800 Saint Martin la Plaine (FR)
(74) Mandataire: Sarlin, Laure V.
(86) Numéro de dépôt international: PCT/FR2010/050249
(87) Numéro de publication internationale: WO 2010/094879

(56) Documents cités:
- EP-A2- 0 077 098
- JP-A- 4 119 121
- JP-A- H0 544 104
- JP-A- 2009 108 426
- US-A- 5 618 561
- NOTIN L ET AL: "Morphology and mechanical properties of chitosan fibers obtained by gel-spinning: Influence of the dry-jet-stretching step and ageing" ACTA BIOMATERIALIA, ELSEVIER, AMSTERDAM, NL, vol. 2, no. 4, 1 juillet 2006 (2006-07-01) , pages 387-402, XP025150238 ISSN: 1742-7061 [extrait le 2006-07-01]
- Ziabicki, Andrzej: "Fundamentals of Fibre Formation" 1976, John Wiley & Sons , London , XP002551346 page 250
- MONTEMBAULT A ET AL: "Physico-chemical studies of the gelation of chitosan in a hydroalcoholic medium" BIOMATERIALS, ELSEVIER SCIENCE PUBLISHERS BV., BARKING, GB, vol. 26, no. 8, 1 mars 2005 (2005-03-01), pages 933-943, XP025280402 ISSN: 0142-9612 [extrait le 2005-03-01]
- BOUCARD N., VITON C., DOMARD A.: "New Aspects of the Formation of Physical Hydrogels of Chitosan in a Hydroalcoholic Medium" BIOMACROMOLECULES, vol. 6, no. 6, 21 octobre 2005 (2005-10-21), pages 3227-3237, XP002551347 DOI: 10.1021/bm050653d

## Description

La présente invention concerne l'obtention, par extrusion, d'un élément longiforme de polysaccharide ; elle concerne notamment le filage du chitosane.

Le chitosane est un dérivé désacétylé de la chitine. Il s'agit d'un copolymère linéaire composé de la distribution le plus souvent statistique de D-glucosamine (résidu ou unité désacétylée) et de N-acétyl-D-glucosamine (résidu ou unité acétylée) reliés ensemble par des liaisons glycosidiques β,(1→4). Le chitosane est biodégradable et biocompatible. De façon générale, il est également bioactif, notamment hypocholestérolémiant, bactériostatique, fongistatique et regénérateur de tissus vivants. Du fait de ces propriétés, il trouve naturellement son intérêt dans les domaines de la cosmétique, de la diététique, de la pharmacie et des biomatériaux.

La technique la plus répandue pour le filage du chitosane est du type filage au mouillé (Georges C. East et Yimin Qin, Wet spinning of chitosan and the acetylation of chitosan fibers, Journal of Applied Polymer Science, 1993, 50 (10), 1773-9) ; elle consiste à réaliser un collodion de chitosane en mettant du chitosane en solution aqueuse en milieu acide dilué, notamment acide acétique, à extruder ledit collodion à travers une filière dans un bain de coagulation alcalin, généralement une solution de soude, de potasse ou d'ammoniaque, à laver, sécher, puis bobiner le filament coagulé obtenu. L'acide dans le collodion est en quantité stoechiométrique par rapport aux fonctions amine du chitosane de sorte que l'on obtient la dissolution du chitosane, grâce à la protonation des fonctions amine de l'unité glucosamine. Lors de l'extrusion du collodion dans le bain alcalin, notamment de soude, de potasse ou d'une solution d'ammoniaque, la fonction amine est déprotonée, ce qui provoque la précipitation du chitosane et la formation d'un sel, notamment d'acétate de sodium, de potassium ou d'ammonium, sel qui est ensuite éliminé lors de l'étape de lavage.

Dans le document WO2005/025520, est proposée une technique de filage qui diffère de la précédente en ce que l'agent coagulant n'est plus une solution alcaline mais un gaz alcalin, en particulier l'ammoniac. Cette technique de filage à sec permet de supprimer tous les milieux aqueux en sortie de filière, y compris les bains de lavage. En effet, étant donné que le sel d'acétate d'ammonium formé à l'intérieur des filaments lors de coagulation en présence du gaz ammoniac est facilement hydrolysé en acide acétique et ammoniac, son élimination totale ou partielle a été possible par la mise en place d'un système de séchage à air chaud humide permettant de remplacer les étapes de lavage/séchage du procédé classique de filage par voie humide. Il est à noter qu'il peut d'ailleurs être intéressant de maintenir une certaine présence de sels résiduels pour certaines applications du fait que cette présence contrôle les propriétés de gonflement des fibres en milieu fortement hydraté.

La présente invention a pour objet un nouveau procédé d'obtention d'un élément longiforme de polysaccharide qui diffère des deux techniques mentionnées ci-dessus.

De manière connue, ce procédé comporte une opération d'extrusion d'une solution extrudable dudit polysaccharide à travers une filière d'extrusion et une opération de coagulation de la solution extrudée.

De manière caractéristique, la solution extrudable est une solution hydro-alcoolique contenant un alcool ne formant pas un azéotrope avec l'eau et ayant une température d'ébullition d'au moins 150°C à pression atmosphérique et l'opération de coagulation comprend une étape d'évaporation de l'eau préférentiellement à l'alcool conduisant à l'obtention d'un élément longiforme extrudé gélifié, sous forme d'un gel principalement alcoolique, notamment en soumettant la solution extrudée à l'action d'un flux d'air chaud. De plus le procédé comporte au moins une opération d'élimination de l'alcool contenu dans ledit gel pour obtenir l'élément longiforme de polysaccharide.

Ainsi, selon la présente invention, en sortie de coagulation, l'élément longiforme gélifié se présente sous la forme d'un gel principalement alcoolique et la formation de l'élément longiforme de polysaccharide est obtenue après élimination de l'alcool qui est contenu dans ledit gel.

Selon une variante de réalisation, le polysaccharide présent dans l'élément gélifié est sous forme ionisée et le procédé comprend une opération de neutralisation de l'élément gélifié. Cette opération vise à neutraliser les charges portées par les formes ionisées présentes dans le gel, ce qui conduit à la suppression des forces électrostatiques en faveur des interactions hydrophobes et des liaisons hydrogène responsables de la réticulation physique des chaînes polymère. Si les formes ionisées sont du type polycation, l'opération met en oeuvre une base pour neutraliser complètement le polymère ; par exemple dans le cas où la solution extrudable de polysaccharide est une solution acide de chitosane, la base réalise la dépronotation de la forme ammonium -NH3⁺ sous forme -NH2. Si les formes ionisées sont du type polyanion, l'opération met en oeuvre un acide pour neutraliser complètement le polymère ; par exemple dans le cas où la solution extrudable de polysaccharide résulte de la mise en solution de hyaluronane ou d'alginate dans une solution aqueuse à pH neutre, l'acide réalise la reprotonation de la forme - COO⁻ sous la forme-COOH.

De préférence, dans cette même variante de réalisation, l'opération de neutralisation est suivie d'une opération de lavage en sorte d'éliminer les sels formés.

L'alcool contenu dans l'élément extrudé gélifié est éliminé au cours de l'opération de neutralisation, lorsque celle-ci intervient, par passage dans un bain contenant une solution, basique ou acide selon le cas et également au cours de l'opération de lavage.

Au moins dans le cas de cette variante de réalisation de la présente invention, mettant en oeuvre une opération de neutralisation, l'élément longiforme obtenu présente une structure cristalline particulière, structure qui se caractérise par une prédominance de l'allomorphe anhydre, alors qu'avec les autres techniques connues, il s'agit d'une forme hydratée.

Selon une variante de réalisation, le procédé comprend également une étape de séchage de l'élément longiforme de polysaccharide.

L'alcool, contenu dans la solution extrudable, qui ne forme pas un azéotrope avec l'eau et qui a une température d'ébullition supérieure à 150°C, est choisi notamment dans le groupe : 1,2- et 1,3-propane-diol, 1,2-, 1,3- et 1,4-butane-diol et 1,2,3-propane-triol. Les températures d'ébullition sont respectivement de 188° C et 215°C pour le 1,2- et 1,3-propane-diol, 191°C, 208°C et 230°C pour le 1,2-, 1,3- et 1,4-butane-diol et 290° C pour le 1,2,3-propane-triol (ou glycérol).

Selon l'invention, l'alcool ne doit pas former d'azéotrope avec l'eau car, dans le cas contraire, c'est l'azéotrope - c'est-à-dire le mélange eau/alcool - qui est évaporé et non préférentiellement l'eau, comme cela est recherché.

De préférence, l'évaporation d'eau, préférentiellement à l'alcool, est réalisée en soumettant la solution extrudée à l'action d'un flux d'air chaud à une température comprise entre 70°C et 130°C. On comprend que la température en question peut varier en fonction de la température d'ébullition de l'alcool retenu pour la formation de la solution hydroalcoolique extrudable.

Le procédé de la présente invention s'applique au chitosane et à de nombreux autres polysaccharides, principalement ceux qui sont solubles dans l'eau et filmogène et notamment qui présentent des liaisons glycosidiques β,(1→4). On peut citer les dérivés de cellulose, l'acide hyaluronique, des hémicelluloses, des alginates et des pectines. S'agissant plus particulièrement du chitosane, de préférence la solution hydroalcoolique extrudable est obtenue en mettant du chitosane dans une solution aqueuse d'acide, notamment en milieu acide acétique, et en ajoutant l'alcool retenu, ne formant pas un azéotrope avec l'eau et ayant une température d'ébullition supérieure à 150°C ; de plus, le bain de neutralisation est, dans ce cas, une solution d'ammoniaque ou de soude.

L'élément longiforme obtenu par le procédé de l'invention est préférentiellement un fil, l'extrusion étant réalisée à travers une filière de filage, soit une filière unique pour former un filament continu, soit une filière multiple pour former un fil multifilamentaire. Dans ce cas, le procédé comporte une opération ultime de bobinage du filament ou du fil multifilamentaire obtenu.

Cependant, le procédé n'est pas limité au filage, l'élément longiforme pouvant se présenter comme un profilé de section quelconque, fonction de la configuration de la filière d'extrusion. Il peut s'agir notamment d'un film, d'une plaque ou d'un tube.

S'agissant plus particulièrement du filage d'un fil de polysaccharide, le procédé comporte au moins une opération d'étirage avant, pendant et/ou après élimination de l'alcool. De préférence cet étirage intervient au moins dès la sortie de la filière d'extrusion.

Selon une variante de réalisation, on règle les conditions d'évaporation en sorte d'éliminer une quantité contrôlée d'eau contenue dans la solution hydroalcoolique extrudée, en sorte d'obtenir un élément longiforme, notamment un fil, dont la structure cristalline comporte une fraction contrôlée d'une structure correspondant à l'allomorphe anhydre du polysaccharide.

S'agissant du filage de chitosane, le fil obtenu dans les conditions ci-dessus présente, grâce à sa structure allomorphe anhydre, des propriétés mécaniques améliorées en particulier une contrainte à la rupture, après immersion dans de l'eau déminéralisée pendant quinze heures, d'au moins 150 MPa. De plus dans le fil de chitosane obtenu par le procédé de la présente invention, l'allomorphe anhydre n'a pas été formé au détriment des chaînes du polymère ce qui permet de maintenir dans le fil un chitosane ayant une masse moléculaire moyenne en masse élevée, notamment supérieure à 350 000 g/mol.

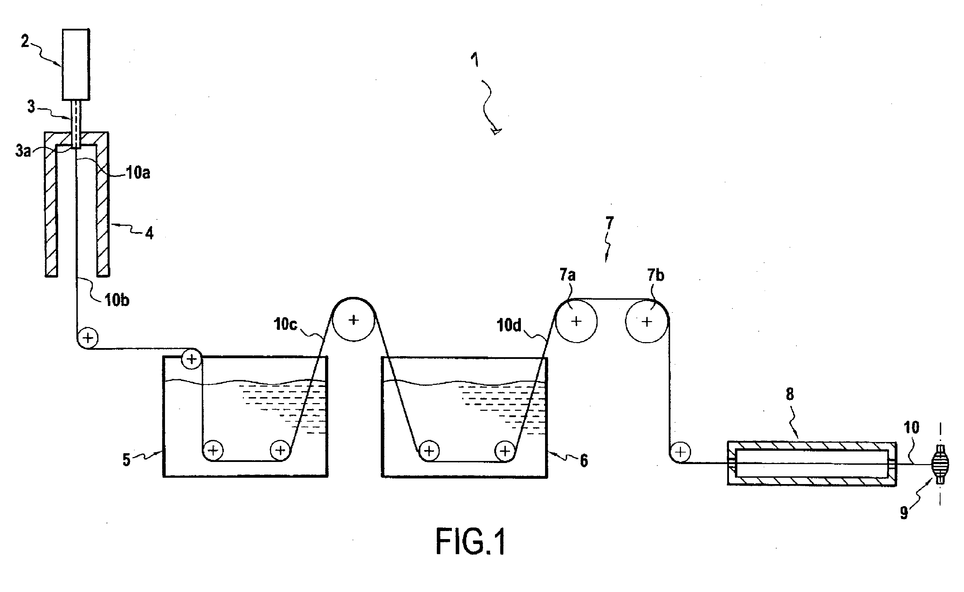

La présente invention sera mieux comprise à la lecture de la description ci-après d'un exemple de fabrication d'un fil de chitosane illustré par le dessin ci-annexé dans lequel
La figure 1 est une représentation schématique de l'installation de filage et
La figure 2 illustre des essais comparatifs.

L'installation 1 comporte, successivement, une extrudeuse 2 et sa filière d'extrusion 3, une enceinte d'évaporation 4, une unité de neutralisation 5, une unité de lavage 6, un système d'étirage 7, une unité de séchage 8 et une unité de bobinage 9.

L'installation ayant la composition ci-dessus peut permettre la fabrication d'un fil, soit un filament continu, soit un fil multifilamentaire selon que la filière d'extrusion 3 est une filière simple à trou unique ou comportant une pluralité de trous ; elle peut également permettre la fabrication d'un film, enroulable sous forme de bobine, avec une filière 3 ayant une section rectangulaire.

S'il s'agit d'extruder une plaque, ou tout autre forme (fibre creuse, tube, profilés divers) non enroulable sur elle-même, l'installation devra comporter des moyens complémentaires de coupe et de manipulation séquencées pour la fabrication de tronçons unitaires de ladite plaque.

L'exemple détaillé qui va être décrit ci-après est relatif à la fabrication d'un fil de chitosane ; cet exemple n'est pas limitatif de la présente invention, celle-ci pouvant concerner la fabrication de tout élément longiforme de polysaccharide susceptible d'être solubilisé sous la forme d'une solution filable hydroalcoolique et qui, de plus, présente des propriétés filmogènes. On peut citer en particulier les éthers de cellulose tels que la carboxymethylcellulose (CMC), l'hydroxypropylcellulose (HPC), la méthylcellulose (MC), la méthyléthylcellulose (MEC), l'hydroxypropylméthyl cellulose (HPMC), les esters de cellulose et principalement l'acétate de cellulose, l'acide hyaluronique, certaines hémicelluloses, les alginates, certaines pectines notamment l'homogalacturomanane.

La solution hydroalcoolique de chitosane est réalisée en dissolvant le chitosane dans une solution aqueuse d'acide puis en ajoutant dans cette solution un alcool qui ne forme pas d'azéotrope avec l'eau et qui a une température d'ébullition très supérieure à celle de l'eau, à savoir d'au moins 150°C. La solution aqueuse d'acide, de préférence acide acétique, est obtenue en ajoutant une quantité d'acide qui est stoechiométrique par rapport aux fonctions amine libre du chitosane dissous. L'alcool choisi pour obtenir la solution hydroalcoolique de chitosane est par exemple le 1,2-propane-diol qui a une température d'ébullition de 188°C.

Avant d'être extrudée, la solution hydroalcoolique est dégazée pour éliminer les bulles de gaz pouvant être à l'origine de défauts dans le fil obtenu.

La solution hydroalcoolique doit présenter une viscosité suffisante pour permettre l'extrusion mais pas trop importante pour ne pas avoir des temps de dégazage trop longs. Pour cela, on utilise une solution ayant une concentration de 1,5 à 3% en poids de chitosane dans un mélange eau/alcool dans une proportion de 50/50 à 30/70 % en masse. Pour obtenir la viscosité adéquate avec de faibles concentrations en chitosane, il est préférable d'utiliser un chitosane de masse molaire élevée, par exemple dans la fourchette de masses molaires moyennes en masse M_{w} de 150 000 à 650 000 g/mol. La solution hydroalcoolique de chitosane a une viscosité apparente comprise entre 1000 et 2000 Pa.s, de préférence de l'ordre de 1500 Pa.s.

Par ailleurs, les meilleures propriétés mécaniques pour le fil sont obtenues en mettant en oeuvre un chitosane dont le degré d'acétylation est faible, notamment inférieur à 40%, de préférence inférieur à 30%. Le degré d'acétylation (DA) est le pourcentage d'unités acétylées par rapport au nombre d'unités totales présentes sur la chaîne de chitosane, soit leur fraction molaire multipliée par 100. Il peut être déterminé par spectrométrie infrarouge à transformée de Fourier ou préférentiellement par spectrométrie RMN du proton ¹H. La remarque ci-dessus ne se limite pas aux formes acétylées du chitosane ; elle concerne aussi toutes autres formes acylées de la fonction amine primaire notamment éthyl-, propyl-, ou butyl-chitosane de faible taux d'acylation, par exemple inférieur à 40%.

Dans un exemple précis de réalisation, la solution hydroalcoolique. extrudable de chitosane a été obtenue en partant, comme matière première, d'un chitosane (Mahtani Chitosan), ayant un degré d'acétylation compris entre 1 et 3%, une masse molaire moyenne en masse élevée comprise entre 450.000 et 600.000 g/mol.

La solution hydroalcoolique, ayant une concentration initiale, avant dégazage, de 2,4% en poids de chitosane, une proportion eau/alcool de 40/60 % en masse, et une viscosité apparente, après dégazage, proche de 1500 Pa.s a été extrudée à travers une filière tubulaire à trou unique dont la section intérieure avait un diamètre de 0,8 mm. L'extrusion a été réalisée avec un débit compris entre 3 et 20 ml/h.

Comme illustré sur la figure, la filière d'extrusion 3 a son extrémité aval 3a qui pénètre dans l'enceinte d'évaporation 4, laquelle est alimentée avec un flux d'air chaud dans des conditions de débit et de température permettant l'évaporation de l'eau préférentiellement à celle de l'alcool. Pour ce faire, l'installation comporte au moins des moyens de contrôle de la température du flux d'air chaud entrant dans l'enceinte 4 et de préférence également des moyens de contrôle de son débit. En évaporant l'eau, on modifie la composition du solvant du fil extrudé 10a. On influe notamment sur la valeur de la constante diélectrique du solvant et par conséquent, sur la balance des interactions hydrophiles/hydrophobes qui, lorsqu'elle atteint une valeur critique, conduit au phénomène de gélification, phénomène qui se traduit par une transition solution/gel progressive de la surface vers le coeur du fil. Ainsi, le fil extrudé 10a sortant de la filière 3 est gélifié, dans toute sa section ou au moins dans sa périphérie, lorsqu'il sort de l'enceinte d'évaporation 4. Le fil gélifié 10b obtenu, qui se présente sous la forme d'un gel principalement alcoolique de chitosane, possède déjà des propriétés mécaniques suffisantes pour être tracté vers les unités suivantes de l'installation 1. Le fil gélifié 10 b pénètre dans l'unité de neutralisation 5 consistant en un bac rempli d'une solution aqueuse alcaline, notamment une solution d'ammoniaque, de soude ou de potasse.

Le passage du fil gélifié 10b dans cette solution alcaline entraîne la conversion des sites -NH₃⁺ en -NH₂ ce qui diminue les répulsions électrostatiques entre les chaînes de polymère et favorise ainsi la formation de liaisons hydrogènes, d'interactions hydrophobes, ce qui conduit à la création de noeuds de réticulations physiques, et par la suite de cristallites.

Le fil gélifié et neutralisé 10c, en sortie de l'unité de neutralisation 5, passe ensuite dans l'unité de lavage 6 consistant en un bac rempli d'eau. Le but de ce lavage est d'éliminer l'excès de base et les sels formés, par exemple l'acétate d'ammonium, de sodium ou de potassium, selon la composition de la solution alcaline, éventuellement le chlorure de sodium dans le cas où la solution hydroalcoolique extrudable contient de l'acide chlorhydrique et la neutralisation une solution de soude. Au cours de cette opération de lavage, les traces éventuelles d'alcool résiduelles sont définitivement éliminées.

Le fil gélifié neutralisé et lavé 10d, obtenu en sortie d'unité de lavage 6, passe ensuite dans l'unité de séchage 8 consistant en une enceinte qui est traversée par un flux d'air chaud à une température de l'ordre de 100 à 110°C. Le fil de chitosane 10e sortant du séchage est enroulé sous forme de bobine dans l'unité finale 9 de bobinage.

L'installation 1 représentée sur la figure comporte également des systèmes d'étirage : un disposé en sortie de filière après évaporation de l'eau, un autre entre l'unité de lavage 6 et l'unité de séchage 8, annoté 7 sur la figure. Ces systèmes d'étirage sont composés de deux cylindres, par exemple 7a et 7b, autour desquels le fil respectivement gélifié, neutralisé et lavé 10d forme plusieurs spires, l'entraînement du cylindre aval 7b étant réalisé à une vitesse linéaire supérieure à celle du cylindre amont 7a. Le but de cet étirage est d'améliorer les caractéristiques mécaniques du fil 10. Plus généralement, cet étirage peut être mis en oeuvre pendant et/ou après l'opération de coagulation, avant, pendant et/ou après l'opération de neutralisation, avant, pendant et/ou après l'opération de lavage, voire éventuellement pendant l'opération de séchage, à l'aide d'un seul ou de plusieurs systèmes d'étirage.

L'alcool qui était contenu dans le fil gélifié 10b, sortant de l'enceinte de coagulation 4, a été éliminé lors des opérations de neutralisation et de lavage, de sorte que le fil 10 obtenu ne comporte sensiblement plus d'alcool, ce qui influe notablement sur sa structure.

On sait que, comme de nombreux polymères naturels, le chitosane est un polymère semi-cristallin qui présente plusieurs formes cristallines dont les deux principales correspondent aux allomorphes hydraté et anhydre (Okuyama, K, et al structural diversity of chitosan and its complexes. Carbohydrate Polymers, 2000.41(3) :p.237-247). La forme hydratée est la forme polymorphe la plus courante du chitosane. La maille cristalline est dans ce cas stabilisée par la présence de molécules d'eau permettant la formation de ponts hydrogène. Il s'agit d'au minimum trois molécules d'eau pour huit unités glucosamine dans la maille. La forme anhydre du chitosane est en revanche moins abondante en raison de la grande affinité du polymère avec l'eau. Elle peut cependant être obtenue grâce à un recuit à une température de l'ordre de 240°C, comme mentionné par Ogawa, K., effect of heating and aqueous suspension of chitosan on the crystallinity and polymorphs. Agricultural and biological chemistry, 1991. Vol 55 (N° 9) P.2375-2379.

Selon la présente invention, cette forme cristalline anhydre est obtenue dans des conditions particulières de mise en oeuvre du matériau, permettant que la cristallinité se développe en milieu hydrophobe. A la différence de l'allomorphe hydraté, aucune molécule d'eau n'est présente au sein de la maille cristalline anhydre. La maille est alors plus compacte et les propriétés mécaniques sensiblement améliorées. De plus, cette forme se réhydrate moins facilement au simple contact de l'eau et conserve de bonnes propriétés mécaniques même en milieu aqueux.

Une étude morphologique par analyse de diffraction des rayons X (rayonnement synchrotron) a permis de mettre en évidence la génération de la forme cristalline anhydre, lors de la formation du fil de chitosane selon le procédé de la présente invention, tout particulièrement mais non exclusivement en faisant varier les conditions de neutralisation.

Il ressort de cette étude, qu'avant neutralisation, la structure du fil gélifié 10b n'est pas très cristalline. Elle est faiblement orientée. Par contre, après neutralisation alcaline, les images WAXS (Wide Angle X-ray scattering) mettent en évidence des systèmes orientés cristallins, ce qui démontre l'importance de l'étape de neutralisation dans le développement de la cristallinité. De plus, les cristaux formés sont orientés dans une direction préférentielle, l'axe des chaînes macromoléculaires correspondant à l'axe du fil. Par ailleurs, l'analyse des anneaux de diffraction permet de constater que, suivant les conditions d'élaboration, on génère dans le fil des cristaux anhydres ou un mélange de cristaux anhydres et hydratés.

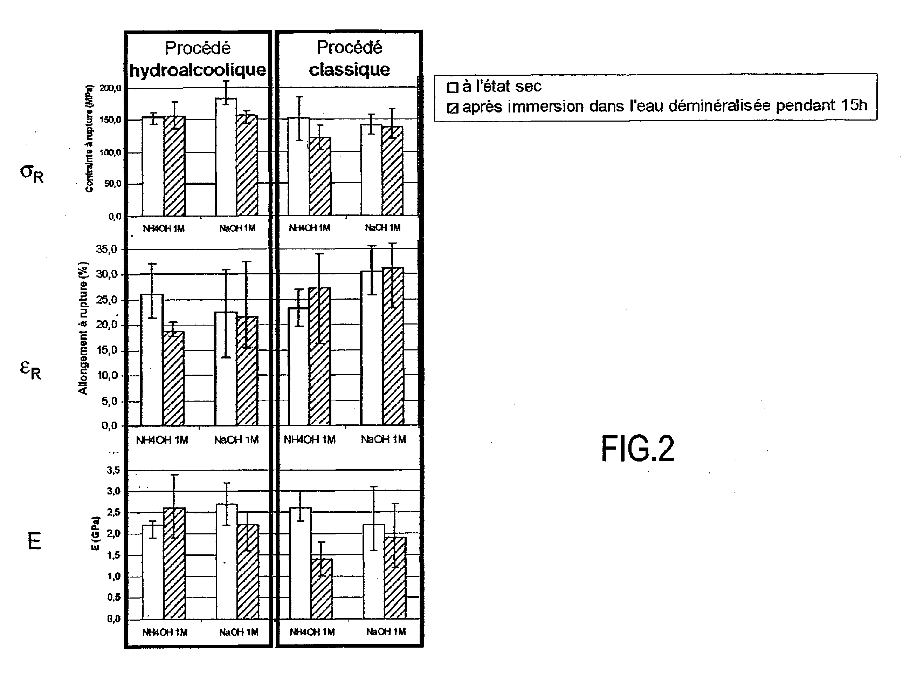

Quelques essais comparatifs ont été réalisés avec des fils A et B de chitosane obtenus, pour les premiers A, selon la technique de filage au mouillé mentionnée ci-dessus et, pour les seconds B, avec le procédé de la présente invention en partant de solutions de chitosane similaires, exception faite que, pour les premiers A, elle est strictement aqueuse alors que, pour les seconds B, elle est hydroalcoolique. Les essais comparatifs ont été réalisés, d'une part, avec les fils A et B à l'état sec et, d'autre part, après immersion dans l'eau déminéralisée pendant quinze heures. La figure 2 illustre les résultats obtenus pour l'allongement à la rupture (pourcentage) et la contrainte à la rupture (MPa) pour deux types de fil A et deux types de fil B, l'un étant obtenu avec une opération de neutralisation dans une solution d'ammoniaque molaire et l'autre dans une solution de soude molaire. Il ressort en particulier que le fil B de chitosane 10 obtenu avec une neutralisation à l'ammoniaque ou la soude, après immersion dans l'eau déminéralisée pendant quinze heures, a une contrainte à la rupture d'au moins 150 MPA, ce qui est supérieur à celle obtenue avec le fil A.

Pour obtenir un fil 10 de chitosane, et plus généralement de polysaccharide, ayant un maximum de cristaux anhydres dans sa structure cristalline, il importe de contrôler l'opération d'évaporation de l'eau pour obtenir l'évaporation totale ou partielle de l'eau contenue dans le fil extrudé 10a, notamment dans l'exemple décrit il importe de contrôler le débit et la température du flux d'air chaud en fonction des paramètres d'extrusion et de la composition de la solution hydroalcoolique.

L'élément longiforme obtenu grâce au procédé de l'invention, que ce soit un fil, mono- ou multi-filament, un film ou une plaque (ou toute autre forme...) peut être utilisé seul ou en combinaison avec d'autres éléments. Par exemple le fil peut être assemblé à un ou plusieurs autres fils pour former, par moulinage ou guipage par exemple, un fil composite. Par exemple le film peut être assemblé à un ou plusieurs autres films, par exemple par enduction, collage ou thermocollage, pour former un film multicouche. Il en est de même pour la plaque ou autre forme.

L'élément longiforme obtenu grâce au procédé de l'invention est utilisable dans de nombreuses applications, partout où la mise en oeuvre d'un polysaccharide est recherchée. Plus particulièrement, il est destiné à entrer dans la fabrication de matériaux destinés à une utilisation médicale, s'agissant notamment de matériaux textiles.

Particulièrement dans les applications médicales, les propriétés de bio-résorption de l'élément longiforme de polysaccharide obtenu par le procédé de l'invention peuvent être recherchées. Il est à noter à cet égard que la présence de l'allomorphe anhydre permet d'en augmenter la durée de résorption in vivo. La formation contrôlée de cet allomorphe anhydre permet d'ajuster la durée de résorption souhaitable au cas par cas. Il est en de même lors de l'assemblage de l'élément longiforme de l'invention possédant cet allomorphe anhydre avec d'autres éléments, comme mentionné ci-dessus. De plus, s'agissant d'un élément de chitosane, il est aussi possible de faire varier le degré d'acétylation du chitosane utilisé pour former la solution hydroalcoolique pour ajuster la durée de résorption dudit élément.

La présente invention n'est pas limitée aux modes de réalisation qui ont été détaillés ci-dessus. En particulier, l'élimination de l'alcool contenu dans l'élément gélifié principalement alcoolique peut être obtenue par évaporation dudit alcool.

## Revendications

1. Procédé d'obtention d'un élément longiforme de polysaccharide comportant une opération d'extrusion d'une solution extrudable dudit polysaccharide à travers une filière d'extrusion et une opération de coagulation de la solution extrudée, **caractérisé en ce que** :
- la solution extrudable est une solution hydro-alcoolique contenant un alcool qui ne forme pas un azéotrope avec l'eau et qui a une température d'ébullition supérieure à 150°C à pression atmosphérique et
- l'opération de coagulation comprend une étape d'évaporation de l'eau préférentiellement à l'alcool conduisant à l'obtention d'un élément longiforme extrudé gélifié sous forme d'un gel principalement alcoolique, notamment en soumettant la solution extrudée à l'action d'un flux d'air chaud,
et **en ce qu'**il comporte au moins une opération d'élimination de l'alcool contenu dans ledit gel pour obtenir l'élément longiforme de polysaccharide.

2. Procédé selon la revendication 1, **caractérisé en ce que** le polysaccharide présent dans l'élément gélifié est sous forme ionisée et le procédé comprend une opération de neutralisation de l'élément gélifié.

3. Procédé selon la revendication 2 **caractérisé en ce que** l'opération de neutralisation consiste à faire passer l'élément gélifié dans un bain contenant une solution de neutralisation, acide ou base, l'alcool étant éliminé au cours du passage de l'élément gélifié dans ledit bain.

4. Procédé selon la revendication 3 **caractérisé en ce qu'**il comprend une opération de lavage pour éliminer les sels formés lors de la neutralisation, l'alcool résiduel étant éliminé au cours du passage dans ledit bain.

5. Procédé selon l'une des revendications 1 à 4, **caractérisé en ce qu'**il comprend une étape de séchage de l'élément longiforme de polysaccharide.

6. Procédé selon l'une des revendications 1 à 5, **caractérisé en ce que** l'alcool est choisi dans le groupe : 1,2- et 1,3-propane-diol, 1,2-, 1,3- et 1,4-butane-diol et 1,2,3-propane-triol.

7. Procédé selon l'une des revendications 1 à 6, **caractérisé en ce que** la température du flux d'air chaud est comprise entre 70°C et 130°C.

8. Procédé selon l'une des revendications 1 à 7 pour la fabrication d'un filament continu ou d'un fil multifilamentaire de polysaccharide, l'extrusion étant réalisée à travers une filière simple ou multiple de filage, **caractérisé en ce qu'**il comporte une opération de bobinage.

9. Procédé selon la revendication 8, **caractérisé en ce qu'**il comporte au moins une opération d'étirage avant, pendant et/ou après élimination de l'alcool.

10. Procédé selon l'une des revendications 1 à 9 pour l'obtention d'un élément longiforme de polysaccharide constitué au moins en partie de la structure cristalline correspondant à l'allomorphe anhydre dudit polysaccharide **caractérisé en ce qu'**on règle les conditions d'évaporation, notamment de température et de débit du flux d'air chaud, pour évaporer l'eau.

11. Procédé selon l'une des revendications 1 à 10 **caractérisé en ce que** le polysaccharide est soluble dans l'eau et filmogène et de préférence présente des liaisons glycosidiques β,(1→4).

12. Procédé selon la revendication 11 **caractérisé en ce que** le polysaccharide est choisi dans le groupe : chitosane, notamment acétylé, de préférence avec un degré d'acétylation inférieur à 40%, notamment inférieur à 30%, ou acylé, dérivés de cellulose, acide hyaluronique, hémicelluloses, alginates et pectines.

13. Procédé selon les revendications 3 et 12 pour l'obtention d'un élément longiforme de chitosane, **caractérisé en ce que** la solution extrudable est obtenue en mettant du chitosane en solution dans une solution aqueuse diluée d'acide, notamment d'acide acétique, et **en ce que** le bain de neutralisation est une solution d'ammoniaque, de soude ou de potasse.

14. Procédé selon l'une des revendications 12 ou 13 **caractérisé en ce que** la masse molaire moyenne en masse du chitosane est comprise entre 150 000 et 650 000 g/mol, de préférence entre 450 000 et 650 000 g/mol.

15. Procédé selon l'une des revendications 13 ou 14 **caractérisé en ce que** la solution hydroalcoolique contient de 1,5 à 3% de chitosane et une proportion eau/alcool de 50/50 à 30/70 % en masse.

16. Procédé selon l'une des revendications 13 à 15 **caractérisé en ce que** la viscosité apparente de la solution hydroalcoolique est comprise entre 1000 et 2000 Pa.s, de préférence de l'ordre de 1500 Pa.s.

17. Procédé selon la revendication 3 et l'une des revendications 13 à 16 **caractérisé en ce que** la concentration du bain de neutralisation est comprise entre 0,1 et 10 mole/L.

18. Procédé selon l'une des revendications 1 à 8 et 11 à 17 pour la fabrication d'un film ou d'une plaque de polysaccharide **caractérisé en ce que** la filière d'extrusion a une section rectangulaire.

19. Procédé selon l'une des revendications 3 et 12 pour l'obtention d'un élément longiforme d'acide hyaluronique ou d'alginate, **caractérisé en ce que** la solution extrudable est obtenue en mettant du hyaluronane ou de l'alginate en solution dans une solution aqueuse à pH neutre et **en ce que** le bain de neutralisation est une solution acide.

20. Procédé selon la revendication 1 **caractérisé en ce que** l'opération d'élimination de l'alcool consiste à évaporer l'alcool contenu dans l'élément gélifié.

21. Fil de chitosane, obtenu par le procédé selon l'une des revendications 12 à 17, **caractérisé en ce qu'**il présente une structure cristalline correspondant à l'allomorphe anhydre et une contrainte à la rupture, après immersion dans de l'eau déminéralisée pendant quinze heures, d'au moins 150 MPa.

22. Fil de chitosane selon la revendication 21, obtenu par le procédé des revendications 14 et 15, **caractérisé en ce que** la masse molaire moyenne en masse du chitosane est supérieure à 350 000 g/mol.

23. Matériau textile, notamment à usage médical, comportant des fils de chitosane, selon l'une des revendications 21 et 22, seuls ou assemblés avec d'autres fils.

## Patentansprüche

1. Verfahren für den Erhalt eines Polysaccharidelements langgestreckter Form, umfassend einen Vorgang zum Extrudieren einer extrudierbaren Lösung des Polysaccharids durch eine Extrudierdüse sowie einen Vorgang zum Koagulieren der extrudierten Lösung, **dadurch gekennzeichnet, dass**:
- die extrudierbare Lösung eine hydroalkoholische Lösung ist, die einen Alkohol enthält, der mit dem Wasser kein Azeotrop bildet und der eine Siedetemperatur von über 150 °C bei atmosphärischem Druck aufweist, und
- der Koagulationsvorgang einen Schritt zum Verdunsten des Wassers bevorzugt gegenüber dem Alkohol umfasst, welcher zum Erhalt eines extrudierten gelierten Elements langgestreckter Form, in Form eines hauptsächlich alkoholischen Gels führt, insbesondere dadurch, dass die extrudierte Lösung der Wirkung eines Heißluftstroms unterzogen wird,
und dass es wenigstens einen Vorgang zum Entfernen des in dem Gel enthaltenen Alkohols umfasst, um das Polysaccharidelement langgestreckter Form zu erhalten.

2. Verfahren nach Anspruch 1, **dadurch gekennzeichnet, dass** das in dem gelierten Element vorhandene Polysaccharid in ionisierter Form vorliegt und das Verfahren einen Vorgang zum Neutralisieren des gelierten Elements umfasst.

3. Verfahren nach Anspruch 2, **dadurch gekennzeichnet, dass** der Neutralisierungsvorgang darin besteht, das gelierte Element ein Bad, welches eine Neutralisierungslösung, Säure oder Base, enthält, durchlaufen zu lassen, wobei der Alkohol im Laufe des Durchgangs des gelierten Elements durch das Bad entfernt wird.

4. Verfahren nach Anspruch 3, **dadurch gekennzeichnet, dass** es einen Waschvorgang umfasst, um die Salze, die während der Neutralisierung gebildet werden, zu entfernen, wobei der Restalkohol im Verlaufe des Durchgangs durch das Bad entfernt wird.

5. Verfahren nach einem der Ansprüche 1 bis 4, **dadurch gekennzeichnet, dass** es einen Schritt zum Trocknen des Polysaccharidelements langgestreckter Form umfasst.

6. Verfahren nach einem der Ansprüche 1 bis 5, **dadurch gekennzeichnet, dass** der Alkohol ausgewählt ist aus der Gruppe: 1,2- und 1,3-Propandiol, 1,2-, 1,3- und 1,4-Butandiol und 1,2,3-Propantriol.

7. Verfahren nach einem der Ansprüche 1 bis 6, **dadurch gekennzeichnet, dass** die Temperatur des Heißluftstroms im Bereich zwischen 70 °C und 130 °C liegt.

8. Verfahren nach einem der Ansprüche 1 bis 7, für die Herstellung eines Endlosfilaments oder eines Multifilamentfadens aus Polysaccharid, wobei das Extrudieren durch eine Einfach- oder Mehrfachspinndüse erfolgt, **dadurch gekennzeichnet, dass** es einen Spulvorgang umfasst.

9. Verfahren nach Anspruch 8, **dadurch gekennzeichnet, dass** es wenigstens einen Streckvorgang vor, während und/oder nach Entfernen des Alkohols umfasst.

10. Verfahren nach einem der Ansprüche 1 bis 9, für den Erhalt eines Polysaccharidelements langgestreckter Form, das wenigstens teilweise von der dem wasserfreien Allomorph des Polysaccharids entsprechenden kristallinen Struktur gebildet ist, **dadurch gekennzeichnet, dass** die Verdunstungsbedingungen, insbesondere Temperatur und Durchsatz des Heißluftstroms, eingestellt werden, um das Wasser zu verdunsten.

11. Verfahren nach einem der Ansprüche 1 bis 10, **dadurch gekennzeichnet, dass** das Polysaccharid wasserlöslich und filmbildend ist und vorzugsweise β,(1→4)-glykosidische Bindungen aufweist.

12. Verfahren nach Anspruch 11, **dadurch gekennzeichnet, dass** das Polysaccharid ausgewählt ist aus der Gruppe: Chitosan, insbesondere acetyliert, vorzugsweise mit einem Acetyllerungsgrad von weniger als 40 %, insbesondere weniger als 30 %, oder acyliert, Cellulosederivate, Hyaluronsäure, Hemicellulosen, Alginate und Pektine.

13. Verfahren nach den Ansprüchen 3 und 12, für den Erhalt eines Chitosanelements langgestreckter Form, **dadurch gekennzeichnet, dass** die extrudierbare Lösung dadurch erhalten wird, dass Chitosan in einer wässrigen, verdünnten Säure-, insbesondere Essigsäurelösung gelöst wird und dass das Neutralisierungsbad eine Ammoniak-, Natriumkarbonat- oder Kaliumkarbonat-Lösung ist.

14. Verfahren nach einem der Ansprüche 12 oder 13, **dadurch gekennzeichnet, dass** die gewichtsmittlere molare Masse des Chitosans zwischen 150.000 und 650.000 g/mol, vorzugsweise zwischen 450.000 und 650.000 g/mol beträgt.

15. Verfahren nach einem der Ansprüche 13 oder 14, **dadurch gekennzeichnet, dass** die hydroalkoholische Lösung 1,5 bis 3 % Chitosan und ein Wasser/Alkohol-Verhältnis von 50/50 bis 30/70 Masseprozent enthält.

16. Verfahren nach einem der Ansprüche 13 bis 15, **dadurch gekennzeichnet, dass** die Scheinviskosität der hydroalkoholischen Lösung zwischen 1000 und 2000 Pa.s beträgt, vorzugsweise in der Größenordnung von 1500 Pa.s liegt.

17. Verfahren nach Anspruch 3 und einem der Ansprüche 13 bis 16, **dadurch gekennzeichnet, dass** die Konzentration des Neutralisierungsbades zwischen 0,1 und 10 Mol/L beträgt.

18. Verfahren nach einem der Ansprüche 1 bis 8 und 11 bis 17, für die Herstellung eines Films oder einer Platte aus Polysaccharid, **dadurch gekennzeichnet, dass** die Extrudierdüse einen rechteckigen Querschnitt aufweist.

19. Verfahren nach einem der Ansprüche 3 und 12, für den Erhalt eines Hyaluronsäure- oder Alginatelements langgestreckter Form, **dadurch gekennzeichnet, dass** die extrudierbare Lösung dadurch erhalten wird, dass Hyaluronan oder Alginat in einer wässrigen Lösung mit neutralem pH-Wert gelöst wird und dass das Neutralisierungsbad eine saure Lösung ist.

20. Verfahren nach Anspruch 1, **dadurch gekennzeichnet, dass** der Vorgang des Entfernens des Alkohols darin besteht, den in dem gelierten Element enthaltenen Alkohol zu verdunsten.

21. Chitosanfaden, der durch das Verfahren nach einem der Ansprüche 12 bis 17 erhalten wird, **dadurch gekennzeichnet, dass** er eine dem wasserfreien Allomorph entsprechende kristalline Struktur und eine Bruchspannung, nach fünfzehnstündigem Eintauchen in demineralisiertes Wasser, von wenigstens 150 MPa aufweist.

22. Chitosanfaden nach Anspruch 21, erhalten durch das Verfahren der Ansprüche 14 und 15, **dadurch gekennzeichnet, dass** die gewichtsmittlere molare Masse des Chitosans mehr als 350.000 g/mol beträgt.

23. Textiles Material, insbesondere für medizinische Zwecke, umfassend Chitosanfäden, nach einem der Ansprüche 21 und 22, allein oder mit weiteren Fäden verbunden.

## Claims

1. A method for producing an elongate polysaccharide element comprising an operation of extruding an extrudable solution of said polysaccharide through an extrusion die and an operation of coagulating the extruded solution, **characterized in that**:
- the extrudable solution is an aqueous-alcoholic solution containing an alcohol which does not form an azeotrope with water and which has a boiling point above 150°C at atmospheric pressure and
- the coagulating operation comprises a step of evaporating the water, in preference to the alcohol, producing a gelled extruded elongate element in the form of a mainly alcoholic gel, in particular by subjecting the extruded solution to the action of a hot air flow,
and **in that** it comprises at least one operation of eliminating the alcohol contained in said gel in order to obtain the elongate polysaccharide element.

2. The method as claimed in claim 1, **characterized in that** the polysaccharide present in the gelled element is in ionized form and the method comprises an operation of neutralizing the gelled element.

3. The method as claimed in claim 2, **characterized in that** the neutralizing operation consists in passing the gelled element through a bath containing a neutralizing solution, which is an acid or a base, the alcohol being eliminated during the passing of the gelled element through said bath.

4. The method as claimed in claim 3, **characterized in that** it comprises a washing operation so as to eliminate the salts formed during the neutralization, the residual alcohol being eliminated during the passage through said bath.

5. The method as claimed in one of claims 1 to 4, **characterized in that** it comprises a step of drying the elongate polysaccharide element.

6. The method as claimed in one of claims 1 to 5, **characterized in that** the alcohol is chosen from the group: 1,2- and 1,3-propanediol, 1,2-, 1,3- and 1,4-butanediol and 1,2,3-propanetriol.

7. The method as claimed in one of claims 1 to 6, **characterized in that** the temperature of the hot air flow is between 70°C and 130°C.

8. The method as claimed in one of claims 1 to 7, for the production of a continuous filament or of a multifilament yarn of polysaccharide, the extrusion being carried out through a single or multiple spinning die, **characterized in that** it comprises a winding operation.

9. The method as claimed in claim 8, **characterized in that** it comprises at least one drawing operation before, during and/or after elimination of the alcohol.

10. The method as claimed in one of claims 1 to 9, for producing an elongate polysaccharide element consisting at least partially of the crystal structure corresponding to the anhydrous allomorph of said polysaccharide, **characterized in that** the evaporation conditions, in particular the conditions of temperature and of flow rate of the hot air flow, are regulated in order to evaporate the water.

11. The method as claimed in one of claims 1 to 10, **characterized in that** the polysaccharide is watersoluble and film-forming and preferably has β-(1→4) glycosidic linkages.

12. The method as claimed in claim 11, **characterized in that** the polysaccharide is chosen from the group: chitosan, in particular acetylated chitosan, preferably with a degree of acetylation of less than 40%, in particular less than 30%, or acylated chitosan, cellulose derivatives, hyaluronic acid, hemicelluloses, alginates and pectins.

13. The method as claimed in claims 3 and 12, for producing an elongate chitosan element, **characterized in that** the extrudable solution is obtained by dissolving chitosan in a dilute aqueous solution of acid, in particular of acetic acid, and **in that** the neutralizing bath is a solution of ammonia, of sodium hydroxide or of potassium hydroxide.

14. The method as claimed in either of claims 12 and 13, **characterized in that** the weight-average molar mass of the chitosan is between 150 000 and 650 000 g/mol, preferably between 450 000 and 650 000 g/mol.

15. The method as claimed in either of claims 13 and 14, **characterized in that** the aqueous-alcoholic solution contains from 1.5 to 3% of chitosan and a water/alcohol proportion of from 50/50 to 30/70% by weight.

16. The method as claimed in one of claims 13 to 15, **characterized in that** the apparent viscosity of the aqueous-alcoholic solution is between 1000 and 2000 Pa.s, preferably about 1500 Pa.s.

17. The method as claimed in claim 3 and one of claims 13 to 16, **characterized in that** the concentration of the neutralizing bath is between 0.1 and 10 mol/l.

18. The method as claimed in one of claims 1 to 8 and 11 to 17, for producing a polysaccharide film or sheet, **characterized in that** the extrusion die has a rectangular cross section.

19. A method as claimed in either of claims 3 and 12, for producing an elongate hyaluronic acid or alginate element, **characterized in that** the extrudable solution is obtained by dissolving hyaluronan or alginate in an aqueous solution at neutral pH, and **in that** the neutralizing bath is an acidic solution.

20. The method as claimed in claim 1, **characterized in that** the alcohol-eliminating operation consists in evaporating the alcohol contained in the gelled element.

21. A chitosan yarn, obtained by means of the method as claimed in one of claims 12 to 17, **characterized in that** it has a crystal structure corresponding to the anhydrous allomorph and a tensile strength, after immersion in demineralized water for fifteen hours, of at least 150 MPa.

22. The chitosan yarn as claimed in claim 21, obtained by means of the method of claims 14 and 15, **characterized in that** the weight-average molar mass of the chitosan is greater than 350 000 g/mol.

23. A textile material, in particular for medical use, comprising chitosan yarns, as claimed in either of claims 21 and 22, alone or assembled with other yarns.
